# EUROPÄISCHE PATENTANMELDUNG

(11) **EP 0 961 047 A2**
(43) Veröffentlichungstag der Anmeldung: **01.12.1999**
(21) Anmeldenummer: 99890173.0
(22) Anmeldetag: 28.05.1999
(51) Int. Cl.: F16D 59/02, F16D 55/28

(54) **Vorrichtung zum Abbremsen von Elektromotoren**

(30) Priorität: 29.05.1998 AT 92898
(71) Anmelder: ATB Austria Antriebstechnik Aktiengesellschaft, 8724 Spielberg (Steiermark) (AT)
(72) Erfinder: Mlinar, Daniel, 8862 St. Ruprecht ob. Murau (AT)
(74) Vertreter: Beer, Manfred, Dipl.-Ing.

(57) **Zusammenfassung**

Eine Federdruckbremse für Elektromotoren besitzt eine mit der Rotorwelle des Elektromotors auf Drehung gekuppelte Bremsscheibe (9), die beidseitig mit ringförmigen Bremsbelägen (8) bestückt ist und die zwischen einem am Lagerschild (1) des Elektromotors befestigten Reibblech (10) und einem Anker (7) angeordnet ist. Der Anker (7) wird von wenigstens einer Druckfeder (11) in Richtung auf das Reibblech (10) belastet, so daß er die Bremsscheibe (9) zwischen dem Reibblech (10) und sich selbst klemmt, so daß die Bremsscheibe (9) den mit ihr über die Rotorwelle gekuppelten Rotor bremst. Bei Betrieb des Elektromotors wird eine Spule (6) mit Strom beaufschlagt, wobei das von ihr erzeugte Magnetfeld den Anker (7) unter Zusammendrücken der wenigstens einen Feder (11) vom Reibblech (10) weg zieht, so daß sich die Bremsscheibe (9) zwischen dem Anker (7) und dem Reibblech (10) frei drehen kann.

## Beschreibung

Die Erfindung betrifft eine Vorrichtung zum Abbremsen von Elektromotoren mit den Merkmalen des einleitenden Teils von Anspruch 1.

Elektromagnetisch gelüftete Federdruckbremsen sind bekannt. Beispielhaft kann auf die AT 378 867 B und die AT 395 361 B verwiesen werden.

Aus der EP 0 043 498 A ist eine Vorrichtung zum Abbremsen von Elektromotoren der eingangs genannten Gattung bekannt. Die EP 0 043 498 A zeigt einen Elektromotor mit eingebauter Federdruckbremse, die einen in axialer Richtung der Rotorwelle verschiebbaren Bremskörper besitzt. Der Bremskörper der bekannten Federdruckbremse wird im ausgeschalteten, stromlosen Zustand des Elektromotors von einer Druckfeder gegen eine Bremsscheibe gedrückt und im eingeschalteten Zustand vom Magnetfeld des Stators von der Bremsscheibe weg zum Stator hin gezogen, so daß die Bremse gelüftet, also wirkungslos ist.

Die WO 93/10368 A zeigt eine elektromagnetisch lüftbare Federdruckbremse mit einem feststehenden Spulenträgergehäuse mit einer ringförmigen Magnetspule und mit einem Reibbelagrotor, der mit einer unverdrehbar angeordneten, aber axial verschieblichen Ankerscheibe zusammenwirkt. Bei stromloser Magnetspule wird den Reibbelag gegen ein Wellengehäuse oder Lagerschild gedrückt. In der WO 93/10368 A wird eine elektrische Steuerschaltung für die Magnetspule zum Ansteuern derselben beim Lüften der Bremse mit einer Leistung, die gegenüber dem normalen Halten der Bremse in der gelösten Stellung stark erhöht ist, verwendet.

Der Erfindung liegt die Aufgabe zugrunde, eine Bremse für Elektromotoren so weiter zu entwickeln, daß sie in das belüftungsseitige Lagerschild eines Elektromotors integriert werden kann.

Erfindungsgemäß wird diese Aufgabe bei einer Federdruckbremse für Elektromotoren der eingangs genannten Gattung mit den Merkmalen des Anspruches 1 gelöst.

Vorteilhaft bei der erfindungsgemäßen Federdruckbremse ist es, daß das belüftungsseitige Lagerschild so ausgestaltet ist, daß es gleichzeitig als Bremsgehäuse dient. Dies bedeutet, daß das Bremsgehäuse herkömmlicher Federdruckbremsen für Elektromotoren entfallen kann und so der Fertigungs- und Montageaufwand verringert wird.

Von Vorteil bei der erfindungsgemäßen Federdruckbremse ist es, daß im Unterschied zu den bekannten Federdruckbremsen die Einbausituation der Teile der Bremse so gestaltet ist, daß das Reibblech nicht wie bisher motorseitig angeordnet ist, sondern die lüfterseitige Abdeckung der Bremse bildet. Dabei sitzt die die Federdruckbremse lüftende Spule, die bei Betrieb des Motors mit Strom beaufschlagt ist, und die durch das so entstehende Magnetfeld die Bremse lüftet, im Lagerschild. Daher ist das Rotorlager in dem bremsenseitigen Lagerschild thermisch nicht belastet, wie dies bei der Federdruckbremse der WO 93/10368 A der Fall ist, so daß auch die dort vorgeschlagene, besondere Steuerung der die Bremse lüftenden Magnet-spule entbehrlich ist.

Vorteilhafte und bevorzugte Ausgestaltungen der erfindungsgemäßen Bremse sind Gegenstand der Unteransprüche.

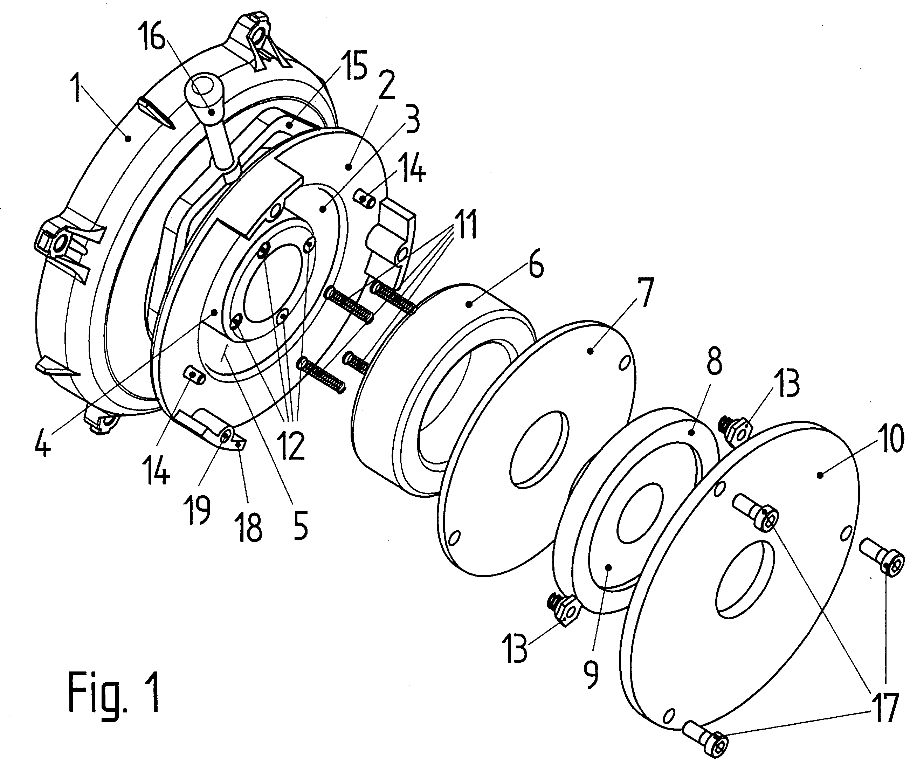

Weitere Einzelheiten und Vorteile der erfindungsgemäßen Federdruckbremse ergeben sich aus der nachstehenden Beschreibung des in den Zeichnungen teils schematisch gezeigten Ausführungsbeispieles der Erfindung. Es zeigt: Fig. 1 in auseinandergezogener Darstellung die einzelnen Bauteile der erfindungsgemäßen Bremse, Fig. 2 die Bremse in ihrer Wirkstellung, Fig. 3 die gelüftete Bremse bei Betrieb des Motors, also bei mit Strom beaufschlagter Spule und die Fig. 4, 5 und 6 in Schrägansicht Ausführungsbeispiele für einen Mitnehmer.

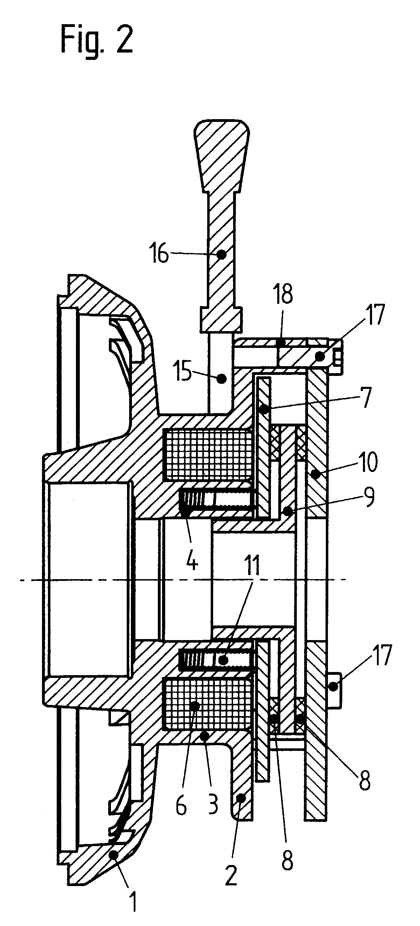

Das lüfterseitige Lagerschild 1 eines Elektromotors trägt einen Ringflansch 2, der mit dem Lagerschild 1 über einen hülsenförmigen Ansatz 3 (Fig. 2) verbunden ist. Vorzugsweise sind das Lagerschild 1, der Ringflansch 2 und der Ansatz 3 einstückig ausgebildet. Radial innerhalb des Ansatzes 3 und konzentrisch zu diesem ist eine mit dem Lagerschild 1 verbundene Hülse 4 vorgesehen. Die Hülse 4 ist mit dem Lagerschild 1 vorzugsweise einstückig ausgebildet. Zwischen der Hülse 4 und dem hülsenförmigen Ansatz 3 ist ein Aufnahmeraum 5 für eine Magnet-Spule 6 vorgesehen. Die Spule 6 wird über nicht dargestellte Leitungen mit Strom beaufschlagt, wenn der Elektromotor betrieben wird.

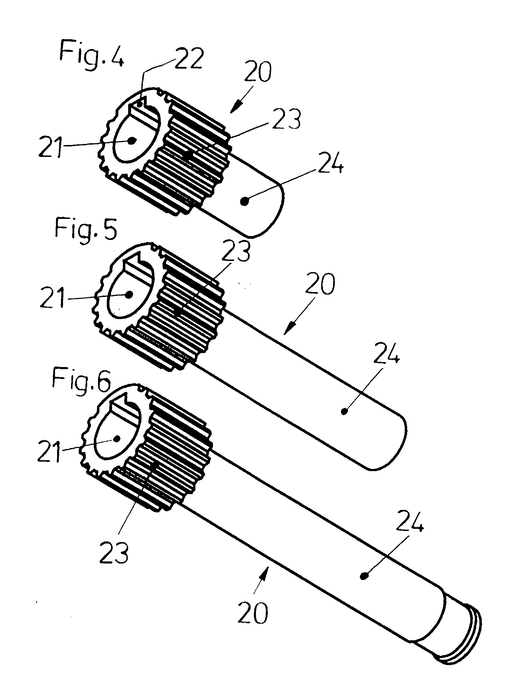

Des weiteren ist ein Anker 7 und eine beidseitig mit, vorzugsweise ringförmigen, Bremsbelägen 8 bestückte Bremsscheibe 9 vorgesehen, die zwischen dem Anker 7 und einem gleichzeitig als Abdeckscheibe dienenden Reibblech 10 angeordnet ist. Die Bremsscheibe 9 ist mit der (nicht dargestellten) Welle des Elektromotors beispielsweise durch einen auf der Welle des Rotors befestigten oder einen Bestandteil der Welle bildenden Mitnehmer (vgl. Fig. 4) auf Drehung gekuppelt, jedoch in Richtung der Achse der Welle beweglich.

Der Anker 7 wird von (im gezeigten Ausführungsbeispiel vier) Druckfedern 11 zur Bremsscheibe 9 und zum Reibblech 10 hin belastet. Die Druckfedern 11 sind mit ihrem vom Anker 7 abgekehrten Ende in Aufnahmebohrungen 12 in der Hülse 4 aufgenommen.

Der Anker 7 wird von, beispielsweise zwei, Muttern 13, die auf Gewindebolzen 14 geschraubt sind, gehalten. Die Gewindebolzen 14 durchsetzen einander bezüglich der Achse der Welle des Motors diametral gegenüberliegende Löcher im Ringflansch 2. Die Muttern 13 erlauben es, das Spiel der Bremse durch axiales Verstellen des Ankers 7 einzustellen.

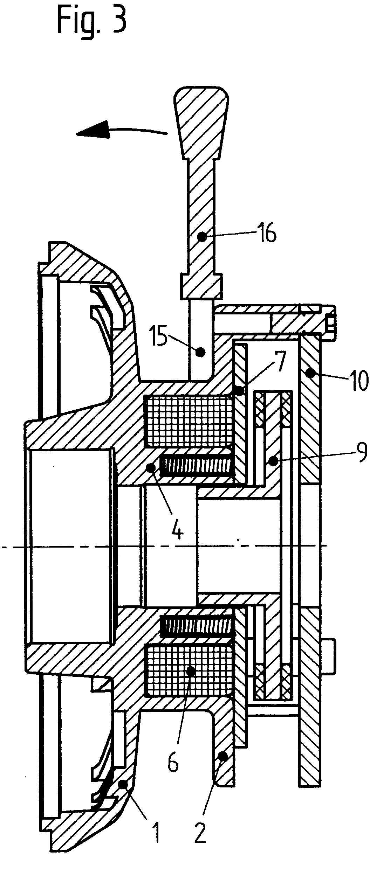

Die Gewindebolzen 14 sind im Ausführungsbeispiel an einem gabelförmigen Lüfthebel 15 mit Handgriff 16 befestigt. Durch Verschwenken des Lüfthebels 15, der in seiner Bereitschaftslage (unter der Wirkung der Federn 11) an der dem Lagerschild 1 zugekehrten Fläche des Ringflansches 2 anliegt (Fig. 2), kann der Anker 7 zum Lagerschild 1 hin verstellt werden, bis er am Ringflansch 2 anliegt (Fig. 3). So kann die Bremse auch ohne Beaufschlagen der Spule 6 mit Strom gelüftet werden. Der Lüfthebel 15 muß aber nicht unbedingt vorgesehen sein.

Das Reibblech 10 ist mit, beispielsweise drei, Gewindeschrauben 17 am Lagerschild 1 befestigt, wozu die Gewindeschrauben 17 in Gewindebohrungen 19 in Befestigungsvorsprüngen 18 eingeschraubt werden. In der zusammengebauten Stellung liegt das Reibblech 10 an den vom Lagerschild 1 abgekehrten Endflächen der Befestigungsvorsprünge 18 an.

In der in Fig. 2 im Axialschnitt gezeigten Wirkstellung der erfindungsgemäßen Federdruckbremse ist die Spule 6 stromlos, so daß der Anker 7 von den ihm zugeordneten Druckfedern 11 vom Lagerschild 1 weg zum Reibblech 10 hin gedrückt wird und dabei die Bremsscheibe 9 gegen das Reibblech 10 drückt. Die an der Bremsscheibe 9 vorgesehenen Bremsbeläge 8 reiben sowohl am Reibblech 10 als auch am Anker 7 und bremsen somit den Rotor des Elektromotors.

Bei mit Strom beaufschlagter Spule 6 wird der ringscheibenförmige Anker 7 durch das von der Spule 6 erzeugte Magnetfeld unter Zusammendrücken der Druckfedern 11 zum Lagerschild 1 hin gezogen, bis er am Ringflansch 2 anliegt, so daß sich die Bremsscheibe 9, wie in Fig. 3 gezeigt, frei drehen kann und auf den Rotor des Elektromotors keine Bremswirkung ausübt.

Die in Fig. 3 gezeigte gelüftete Stellung der Bremse (Nicht- Wirkstellung) kann bei einer mit einem Lüfthebel 15 ausgestatteten Ausführungsform auch dadurch herbeigeführt werden, daß der Handgriff 16 des Lüfthebels 15, in Richtung des in Fig. 3 gezeigten Pfeiles verschwenkt wird, so daß der Anker 7 über die Gewindebolzen 14, die mit dem Lüfthebel 15 verbunden sind, auf das Lagerschild 1 hin, also vom Reibblech 10 weg bewegt und die Bremse gelüftet wird. Dieses Lüften der Federdruckbremse von Hand aus kann dazu verwendet werden, um bei Montagearbeiten die Welle des Rotors nach Lüften der Bremse in einen für die Montageaufgabe günstige Lage zu drehen und diese Lage durch Loslassen des Handgriffes 16 wieder festzulegen.

Ein in Fig. 4 gezeigter Mitnehmer 20 ist beispielsweise als einstückiger Sinterteil 20 ausgebildet. Die Welle des Rotors greift in eine Bohrung 21 des Mitnehmers 20 ein und wird, beispielsweise durch eine in eine Nut 22 in der Bohrung 21 des Mitnehmers 20 eingreifende Feder, mit dem Mitnehmer 20 kraft- oder formschlüssig auf Drehung gekuppelt. An einem Ende ist der Mitnehmer 20 mit einem Profil 23 (z.B. einer Außenzahnung) versehen, über das die Bremsscheibe 9 gesteckt wird, so daß sie über den Mitnehmer 20 mit der Welle des Rotors auf Drehung gekuppelt, jedoch in Richtung der Achse der Rotorwelle verschiebbar ist. In einem wellenstummelartigen Ansatz 24 des Mitnehmers 20 kann eine Durchgangsbohrung vorgesehen sein, die von der der Bohrung 21 gegenüberliegenden Stirnfläche des Ansatzes 24 ausgeht. Mit Hilfe eines in diese Bohrung eingeführten Verbindungselementes, wie einer Zugschraube, kann der Mitnehmer 20 axial gesichert werden.

Die Fig. 5 und 6 zeigen weitere Ausführungsformen des Mitnehmers 20, die sich von der in Fig. 4 gezeigten Ausführungsform durch eine andere Ausführung des wellenstummelartigen Ansatzes 24 unterscheiden.

Vorteil dieser Bauweise ist, daß für verschiedene Anbauvarianten ein- und dieselbe Welle des Rotors verwendet werden kann.

Der Mitnehmer 20 kann in seinen Ausführungsformen beispielsweise als Aufnahme für folgende Anbauvarianten dienen:
Bremse,
Bremse und Drehgeber,
Bremse und Ventilator oder
Bremse und Drehgeber und Ventilator.

Zusammenfassend kann ein bevorzugtes Ausführungsbeispiel der Erfindung wie folgt beschrieben werden:

Eine Federdruckbremse für Elektromotoren besitzt eine mit der Rotorwelle des Elektromotors auf Drehung gekuppelte Bremsscheibe 9, die beidseitig mit ringförmigen Bremsbelägen 8 bestückt ist und die zwischen einem am Lagerschild 1 des Elektromotors befestigten Reibblech 10 und einem Anker 7 angeordnet ist. Der Anker 7 wird von wenigstens einer Druckfeder 11 in Richtung auf das Reibblech 10 belastet, so daß er die Bremsscheibe 9 zwischen dem Reibblech 10 und sich selbst klemmt, so daß die Bremsscheibe 9 den mit ihr über die Rotorwelle gekuppelten Rotor bremst. Bei Betrieb des Elektromotors wird eine Spule 6 mit Strom beaufschlagt, wobei das von ihr erzeugte Magnetfeld den Anker 7 unter Zusammendrücken der wenigstens einen Feder 11 vom Reibblech 10 weg zieht, so daß sich die Bremsscheibe 9 zwischen dem Anker 7 und dem Reibblech 10 frei drehen kann.

## Patentansprüche

1. Vorrichtung zum Abbremsen von Elektromotoren mit einem in Richtung Achse des Rotors verschiebbaren, sich mit dem Rotor drehenden Bremskörper, der von wenigstens einer Druckfeder in Richtung auf einen eine Bremsfläche aufweisenden Bauteil des Elektromotors belastet ist, und der bei Betrieb des Motors durch Magnetkräfte von der Bremsfläche weg gelüftet ist, dadurch gekennzeichnet, daß als Bremskörper eine Bremsscheibe (9) vorgesehen ist, die zwischen einem mit dem Lagerschild (1) verbundenen, die Bremsfläche bildenden Reibblech (10) und einem in Richtung der Achse des Rotors beweglichen Anker (7) angeordnet ist, daß der Anker (7) von wenigstens einer Feder (11) in Richtung auf das Reibblech (10) belastet ist und daß auf der vom Reibblech (10) abgekehrten Seite des Ankers (7) eine Spule (6) vorgesehen ist, die zum Lüften der Bremse durch Magnetkräfte mit Strom beaufschlagbar ist.

2. Vorrichtung nach Anspruch 1, dadurch gekennzeichnet, daß das Reibblech (10) über Schrauben (17) mit einem Flansch (2) des Lagerschildes (1) verbunden ist.

3. Vorrichtung nach Anspruch 2, dadurch gekennzeichnet, daß die Schrauben (17) in Befestigungsansätze (18) am Flansch (2) eingeschraubt sind.

4. Vorrichtung nach Anspruch 2 oder 3, dadurch gekennzeichnet, daß der Flansch (2) mit dem Lagerschild über einen hülsenförmigen Ansatz (3) verbunden ist.

5. Vorrichtung nach Anspruch 4, dadurch gekennzeichnet, daß radial innerhalb des hülsenförmigen Ansatzes (3) eine Hülse (4) vorgesehen ist und daß die Spule (6) in dem Raum (5) zwischen dem hülsenförmigen Ansatz (3) und der Hülse (4) aufgenommen ist.

6. Vorrichtung nach Anspruch 5, dadurch gekennzeichnet, daß die wenigstens eine Druckfeder (11), die den Anker (7) belastet, in einer Aussparung in der Hülse (4) aufgenommen ist.

7. Vorrichtung nach einem der Ansprüche 1 bis 6, dadurch gekennzeichnet, daß der Anker (7) als Ringscheibe ausgebildet ist.

8. Vorrichtung nach einem der Ansprüche 1 bis 7, dadurch gekennzeichnet, daß der Anker (7) mit dem Lagerschild (1) in Richtung der Achse des Rotors des Elektromotors beweglich, jedoch gegenüber dem Lagerschild (1) nicht verdrehbar verbunden ist.

9. Vorrichtung nach einem der Ansprüche 2 bis 8, dadurch gekennzeichnet, daß der Anker (7) über wenigstens zwei Stellschrauben (13) mit dem Flansch (2) des Lagerschildes (1) verbunden ist.

10. Vorrichtung nach Anspruch 9, dadurch gekennzeichnet, daß die Stellschrauben (13) mit Gewindebolzen (14) verbunden sind und daß die Gewindebolzen (14) gegenüber dem Flansch (2) des Lagerschildes (1) wenigstens in Richtung der Achse des Rotors beweglich aufgenommen sind.

11. Vorrichtung nach Anspruch 10, dadurch gekennzeichnet, daß die Gewindebolzen (14) mit einem Lüfthebel (15) verbunden sind.

12. Vorrichtung nach Anspruch 11, dadurch gekennzeichnet, daß der Lüfthebel (15) einen Handgriff (16) trägt.

13. Vorrichtung nach einem der Ansprüche 1 bis 12, dadurch gekennzeichnet, daß die Bremsscheibe (9) beidseitig mit, vorzugsweise ringförmigen, Bremsbelägen (8) bestückt ist.

14. Vorrichtung nach einem der Ansprüche 1 bis 13, dadurch gekennzeichnet, daß zur Kupplung der Bremsscheibe (9) mit der Welle des Rotors ein Mitnehmer (20) vorgesehen ist, der über das bremsenseitige Ende der Welle des Rotors gesetzt ist.

15. Vorrichtung nach Anspruch 14, dadurch gekennzeichnet, daß der Mitnehmer (20) eine Bohrung (21) zur Aufnahme des bremsenseitigen Endes der Rotorwelle aufweist.

16. Vorrichtung nach Anspruch 15, dadurch gekennzeichnet, daß der Mitnehmer (20) im Bereich der Bohrung (21) formschlüssig oder kraftschlüssig, beispielsweise durch eine in eine Nut (22) eingesetzte Feder, mit dem lüftungsseitigen Ende der Welle des Rotors verbunden ist.

17. Vorrichtung nach einem der Ansprüche 14 bis 16, dadurch gekennzeichnet, daß der Mitnehmer (20) bereichsweise zur drehfesten, jedoch in Richtung der Achse der Rotorwelle beweglichen Kupplung mit der Bremsscheibe (9) ausgebildet ist.

18. Vorrichtung nach Anspruch 17, dadurch gekennzeichnet, daß der Mitnehmer (20) bereichsweise mit einem in Richtung der Achse verlaufenden Profil, beispielsweise einer Zahnung (23), versehen ist.

19. Vorrichtung nach Anspruch 17 oder 18, dadurch gekennzeichnet, daß der Mitnehmer (20) im Anschluß an den für die Kupplung mit der Bremsscheibe (9) dienenden Bereich (23) mit einem wellenstummelartigen Ansatz (24) ausgestattet ist.

20. Vorrichtung nach Anspruch 19, dadurch gekennzeichnet, daß im freien Ende des wellenstummelartigen Ansatzes (24) des Mitnehmers (20) eine Durchgangsbohrung zur Aufnahme eines Verbindungselementes vorgesehen ist.
